# EUROPEAN PATENT SPECIFICATION

(11) **EP 3 184 238 B1**
(45) Date of publication and mention of the grant of the patent: **22.04.2020**
(21) Application number: 17000179.6
(22) Date of filing: 30.04.2012
(51) Int. Cl.: B23Q 35/128, B23C 3/35, B23P 15/00, G06K 19/07, E05B 19/00

(54) **KEY DUPLICATION MACHINE**
SCHLÜSSELDUPLIZIERUNGSMASCHINE
MACHINE DE DUPLICATION DE CLÉ

(30) Priority: 29.04.2011 US 201113097581
(43) Date of publication of application: 28.06.2017
(62) Divisional of application: 12003030.9
(73) Proprietor: Hy-Ko Products Company, Northfield, OH 44067 (US)
(72) Inventor: Mutch, William R., North Ridgeville, OH 44039 (US); Porras, Randall A., North Olmsted, OH 44070 (US); Fiore, Thomas F., Willowick, OH 44095 (US)
(74) Representative: Müller-Boré & Partner Patentanwälte PartG mbB

(56) References cited:
- WO-A1-01/57472
- WO-A2-2007/087389

## Description

### FIELD OF INVENTION

This invention relates generally to apparatus and methods for duplicating keys, and more specifically, this invention relates to apparatus and methods for cutting duplicate keys based on a captured image of a master key.

### BACKGROUND

Key duplication and key cutting machines are designed to reproduce a key pattern of a master key onto a key blank. Prior art key duplication and key cutting machines typically determine the key pattern of a master key by mechanically engaging the key pattern of a master key with a stylus, tracer bar, or other such mechanical member. For example, prior art key duplication machines typically comprise a pair of clamps or vise grips mounted on a carriage. A master key, having a key pattern, is placed in a first clamp. A key blank, manually selected by the machine operator, is placed in a second clamp, which is normally positioned adjacent to the first clamp. The stylus is placed in contact with the key pattern of the master key. A cutting wheel is placed in contact with an edge of the key blank, into which the key pattern of the master key is to be duplicated. The stylus and cutting wheel are coupled such that the movement of the cutting wheel is synchronized with and controlled by the movement of the stylus.

The carriage is arranged such that the carriage may be moved pivotally and linearly along a longitudinal supporting shaft that is generally parallel to the blades of the master key and key blank. The carriage is typically moved manually along the shaft, causing the stylus to move along the key pattern of the master key. As the stylus moves along the key pattern of the master key to trace the key pattern, the cutting wheel moves along the blade of the key blank. The coupling of the stylus and cutting wheel controls the movement of the cutting wheel and cuts a duplicate key pattern into the key blank. Once the cutting process is completed, the newly duplicated key may be removed from the clamp and buffed on a buffing wheel or swiped across a wire brush to remove any burrs.

In the prior art process described, the key cutting machine operator manually selects the key blank. It is of great importance that the key pattern of a master key be copied onto an appropriate key blank having the same key blade and grooves. There are numerous key blanks, and many are not readily distinguishable from each other. Identifying the correct key blank for use in duplication often requires visually examination of a plurality of key blanks, where differences between key blanks may be very subtle, significantly increasing the level of difficulty in identifying the proper key blank. All too often, businesses that offer key cutting services are not staffed by experienced locksmiths capable of consistently and accurately identifying the proper key blank to be used. Instead, an employee is shown how to "eyeball" what is thought to be the correct blank and then cut a duplicate key at the substantial risk of the key working improperly.

Once a key blank is manually chosen by the operator, that key blank goes through the cutting process. If a mistake is made in the manual selection of a key blank, the entire process of manually identifying the best key blank and mechanically cutting the key must begin again. Often, such errors are not identified until after the customer leaves the store, thus resulting in frustration with the retailer due to an unsuccessful key cut.

Although prior art key duplication machines and processes are well established and widely utilized, such machines and processes produce a relatively high scrap rate, overly rely on the experience and judgment of machine operators, and may not allow for evaluation of the accuracy of a duplicate key without the duplicate key being tested in its associated lock. Due to these and other limitations of the prior art, the art field is constantly striving to improve cut accuracy, cut quality, and ease of use of key duplication machines and processes. Improvements to key duplication machines and processes that enhance the accuracy and quality of a duplicate key or produce more user-friendly machines are well received in the key duplication industry.

Automotive keys often utilize transponder chips in the head of the key to provide an enhanced level of security. The automobile or vehicle may be capable of reading the chip in the key and verifying that the proper electronic code is present before allowing the vehicle to start or run. In some newer vehicles these codes are encrypted and/or may be rolling (changing) codes to make the copying of a key even more difficult. This presents a particular challenge to aftermarket key duplicators. Commonly, electronic devices and keys are required to duplicate such automotive keys. The keys have the electronic chips or circuit boards in the head of the key and the duplicator must have an electronic device, such as an antenna, to read the chip or circuit board and write to the key.

Traditionally, devices designed to interact with keys having chips or circuit boards are stand-alone devices that are designed for transponder programming only. The programming devices consist of an antenna, a circuit board, a firmware, and some type of input/output components (such as input buttons and a display screen). The automotive key duplicator requires a full key cutting machine as well to cut the blades of the new key.

A general goal of the industry is to develop key duplication machines and processes that are so user-friendly that a customer or general consumer may duplicate a key with minimal instructions and minimal knowledge of keys. Therefore, improvements in machines and processes for cutting and reproducing duplicate keys that simplify the cutting process or improve the accuracy of key blank identification are greatly desired. Further, the industry constantly strives for less expensive, easier to assemble, and easier to maintain machines. Should newly developed key duplication machines or processes achieve any of these objectives, it would be a significant improvement over the expensive and often difficult to use key cutting machines currently known in the field.

WO 01/57472 A1 discloses a method and apparatus for measuring an original key, wherein a line of the light is focused onto the key surface in a direction perpendicular to the key surface. A camera, or other type of detector is disposed to receive light deflected by the key at an oblique angle. The keyway and keycode of the key can be determined from the deflected pattern of light. In an alternative embodiment, a transponder of a key is interrogated by the apparatus in order to determine the keyway to be cut into the key preform.

### SUMMARY OF INVENTION

The invention is defined in the appended claims. Apparatus, methods, and other embodiments associated with a key duplication machine are described. In one embodiment, an assembly for duplicating a master key includes an optical imaging device, a logic, a clamping assembly, and a cutting member. The optical imaging device is capable of capturing an optical image of at least a portion of the master key. The logic is capable of determining a key pattern of the master key from the optical image of the master key. The clamping assembly is capable of clamping a key blank and the cutting member is capable of cutting a key pattern into said key blank.

In another embodiment, a method for duplicating a master key includes capturing an optical image of at least a portion of the master key; providing a logic to determine a key pattern of the master key from the optical image of the master key; securing a key blank; and cutting a key pattern into the key blank.

### DESCRIPTION OF THE DRAWINGS

In the accompanying drawings, which are incorporated in and constitute a part of this specification, embodiments of the invention are illustrated, which, together with a general description of the invention given above, and the detailed description given below serve to illustrate the principles of this invention. The drawings and detailed description are not intended to and do not limit the scope of the invention or the claims in any way. Instead, the drawings and detailed description only describe embodiments of the invention, and other embodiments of the invention not described are encompassed by the claims.
Figure 1 is perspective view of an exemplary embodiment of a key duplication machine in accordance with the present invention;
Figure 2 is a front view of the key duplication machine of Figure 1;
Figure 3 is a side view of the key duplication machine of Figure 1;
Figure 4A is a plan view of a master key;
Figure 4B is a plan view of a key blank;
Figure 5 is a perspective view of a key secured in the slot of the key duplication machine of Figure 1;
Figure 6 is a partial perspective view of the interior of the key duplication machine of Figure 1;
Figure 7 is a partial perspective view of the interior of the key duplication machine of Figure 1;
Figure 8 is a partial perspective view of the interior of the key duplication machine of Figure 1;
Figure 9 is a partial perspective view of the interior of the key duplication machine of Figure 1;
Figure 10 is a plan view of a key blank positioned between positioner fingers of the key duplication machine of Figure 1;
Figure 11 is a perspective view of a cutting wheel and positioner finger of the key duplication machine of Figure 1;
Figure 12 is a partial perspective view of the interior of the key duplication machine of Figure 1;
Figure 13 is a perspective view of a top clamp member of the key duplication machine of Figure 1;
Figure 14 is a partial perspective view of the interior of the key duplication machine of Figure 1;
Figure 15 is a partial perspective view of the interior of the key duplication machine of Figure 1;
Figure 16 is a front view of a shavings drawer of the key duplication machine of Figure 1;
Figure 17 is a rear view of a shavings drawer of the key duplication machine of Figure 1;
Figure 18 is a partial perspective view of the interior of the key duplication machine of Figure 1;
Figure 19 is a partial perspective view of the interior of the key duplication machine of Figure 1;
Figure 20 is an exploded view of the key duplication machine of Figure 1;
Figure 21 is an exploded view of the key duplication machine of Figure 1;
Figure 22 is a screen shot of a user interface for use with the key duplication machine of claim 1;
Figure 23 is a screen shot of a user interface for use with the key duplication machine of claim 1;
Figure 24 is a screen shot of a user interface for use with the key duplication machine of claim 1;
Figure 25 is a screen shot of a user interface for use with the key duplication machine of claim 1; and
Figure 26 is a screen shot of a user interface for use with the key duplication machine of claim 1.
Figure 27 illustrates an embodiment of a key duplication machine having an key chip reader.
Figure 28 illustrates an embodiment of a key load point for a key duplication machine having an embedded key chip reader.
Figure 29 illustrates a zoomed in cut-away view of a key load point for a key duplication machine having an embedded key chip reader.

### DETAILED DESCRIPTION OF THE INVENTION

As described herein, apparatus and methods can be designed to produce accurate and reliable duplicates of master keys. In one embodiment, the duplication of a master key is facilitated by the capture of an optical image of a profile or silhouette of the master key, including the key pattern of the master key, and the capture of a profile or silhouette of a key blank. As will be further described herein, the captured images may be analyzed by logic to determine the proper key blank to be used for a duplicate key, validate the selection of the proper key blank, facilitate the accurate cutting of the key pattern of the master key into the key blank, and validate the accuracy of the key pattern cut into the key blank. The apparatus and methods may further facilitate the cutting of a substantial variety of key types, such as single-sided keys, double-sided keys, sidewinder keys, house keys, automobile keys, commercial keys, and the like. The analysis of images by logic may include, for example, the logic storing images, storing data, quantifying physical measurements based on the image, retrieving referencing data contained in a database, and the like.

As used herein, the term "logic" includes but is not limited to hardware, firmware, software and/or combinations of each to perform a function(s) or an action(s), and/or to cause a function or action from another logic, method, and/or system. For example, based on a desired application or needs, logic may include a software controlled microprocessor, discrete logic like an application specific integrated circuit (ASIC), an analog circuit, a digital circuit, a programmed logic device, a memory device containing instructions, or the like. Logic may include one or more gates, combinations of gates, or other circuit components. Logic may also be fully embodied as software. Where multiple logical logics are described, it may be possible to incorporate the multiple logical logics into one physical logic. Similarly, where a single logical logic is described, it may be possible to distribute that single logical logic between multiple physical logics. In addition, as used herein, the term "database" includes a physical and/or logical entity that can store data. A database may be, for example, a traditional database, a table, a file, a list, a queue, a heap, a memory, a register, and so on. A database may reside in one logical and/or physical entity and/or may be distributed between two or more logical and/or physical entities.

Optionally, the apparatus and methods described herein may accept input from a user or operator of a key duplication machine and may provide output to the user or operator of the machine to further facilitate key duplication. For example, the apparatus may include a user interface, such as monitor, touch screen, or other such device, through which a user may enter information and information may be displayed to the user.

In an embodiment, a method of using the key duplication machine comprises the steps of inserting a master key into the machine such that the blade of the master key is within an imaging zone of the machine; capturing an image of the key pattern of the master key; utilizing logic to analyze the captured image; comparing the captured image with data on key blanks contained in a database; determining the proper key blank for duplicating the master key; outputting information regarding the proper key blank to the user; removing the master key from the machine; retrieving and inserting the proper key blank into the machine such that the blade of the key blank is within the imaging zone of the machine; capturing an image of the key blank; using logic to analyze the image of the key blank and validating that the key blank is proper; aligning the key blank; moving the key blank to a cutting zone of the machine; cutting the key pattern of the master key into the key blank; moving the newly-cut duplicate key to the imaging zone of the machine; capturing an image of the duplicate key; using logic to analyze the image of the duplicate key; compare the analysis of the image of the master key with the analysis of the image of the duplicate key to validate the accuracy of the key pattern cut into the duplicate key; removing the duplicate key from the machine; and de-burring the duplicate key.

An exemplary embodiment of a key duplication machine **10** is illustrated in the accompanying Figures. The key duplication machine **10** as described herein has numerous features or improvements, each of which are believed to be independently novel. Therefore, while embodiments of the present invention are described as utilizing each of these novel features or improvements in the aggregate, nothing in the present description should be interpreted as requiring an embodiment to include or exclude any of the particular improvements described herein. In addition, the key duplication machine **10** described herein incorporates a key blank identification system and a key cutting system into a single apparatus. However, it should be understood that either system could be used individually or used together. Nothing in this description should be interpreted to limit novel features of each individual system as used alone or in an integrated unit. Therefore, as described herein as an integrated system, a master key is imaged and compared with other key blanks to determine the appropriate key blank to be used, while also utilizing the master key image to provide key pattern information to be cut into the key blank.

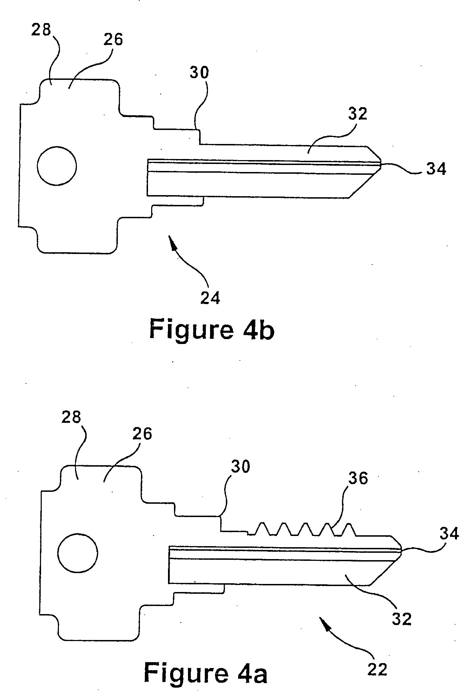

Figures 4A and 4B illustrate a common master key **22** and key blank **24.** While it is known that numerous types of keys are used in the key industry, for simplicity the master key **22** illustrated in Figure 4A is an exemplary house key, and the key blank **22** illustrated in Figure 4B is a exemplary key blank **24** for the house key **22.** Both the master key **22** and key blank **24** typically include a head **26** having a bow **28,** a shoulder **30,** a blade **32,** and a keyway groove **34.** The keyway groove **34** is typically a narrow, milled-out area along the length of the blade **32** that allows the blade **32** to bypass the wards in a keyway. Such keyway grooves **34** may already be cut into the key blank **24** to simplify the key cutting operation. Therefore, when duplicating a master key **22,** a key blank **24** must include a keyway groove **34** that is either identical to or similar to the master key **22.** The master key **22** includes a key pattern **36,** which is a model for any key pattern cut into the key blank **24** in duplicating the master key **22.** As used herein, master key refers to any key that has a key pattern, whether an original key purchased with a lock and fabricated by the manufacturer of the lock or a subsequent duplication of the original key. The reference to a key as a master key indicates that the key serves as a model from which to cut a duplicate key to perform the same unlocking function as the master key.

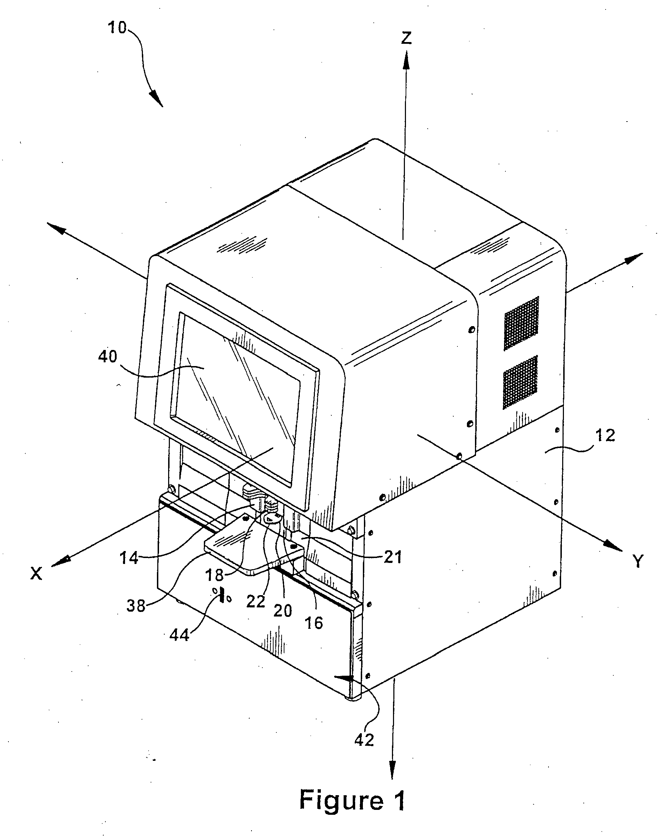

With reference to Figures 1 through 3, an assembled key duplication machine **10** is illustrated. The machine **10** includes an outer shell **12,** comprising a number of panels arranged to enclose and protect internal components, mechanisms, and systems of the key duplication machine **10.** The machine **10** further includes a key load position to load a key into the machine. The key load position may comprise a door clamp **14,** which is biased against a base **16** with a biasing member (not shown). The door clamp **14** may be biased against the base **16** by any biasing member such as, for example, an extension or compression coil spring, a torsion spring, a counterweight, or the like. The door clamp **14** may be raised against the biasing force by a handle **18.**

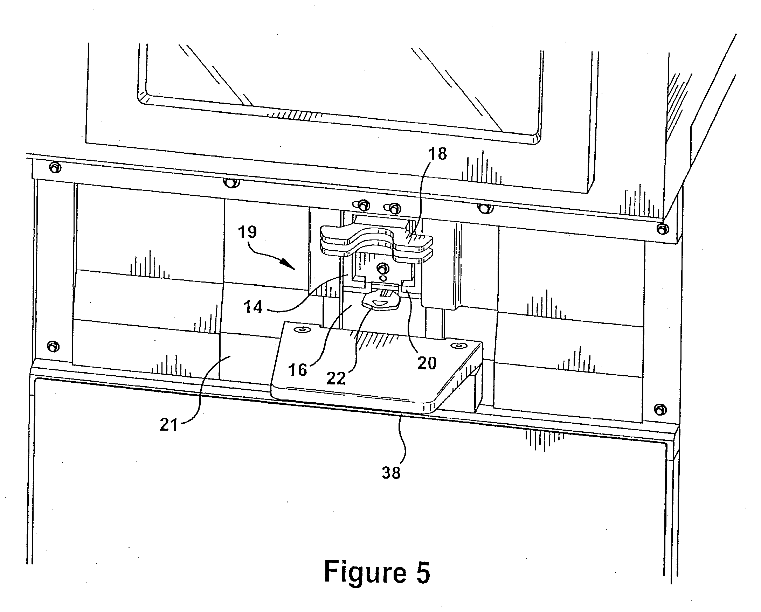

The combination of the door clamp **14,** base **16,** handle **18,** and biasing member forms a retention mechanism **19** for retaining or securing a master key **22** or key blank **24.** As illustrated in Figure 5, the door clamp **14** and the base **16** form a slot **20** that may be utilized to retain or secure a master key **22** or key blank **24** such that the blade **32** of the key **22** and **24** is located within the machine **10.** The force placed on the key **22** and **24** in the slot **20** is sufficient to retain or hold the key **22** and **24** in place but also allows some movement of the key **22** and **24** to facilitate proper alignment of the key **22** and **24.**

As will be further described, the blade **32** of a key **22** and **24** may be positioned within the machine **10** such that an image of the blade **32** may be captured. In addition, the blade **32** of a key blank **24** may be positioned within the machine **10** such that the blade **32** is exposed to clamps and cutters. The clamps are arranged to selectively rigidly secure the key blank **24,** and the cutters are arranged to selectively cut a key pattern into the blade **32** of the key blank **24** when the key blank **24** is rigidly secured in the clamps.

In an embodiment, the key **22** and **24** may be positioned with a first side of the blade **32** facing upward, or the key **22** and **24** may be rotated 180 degrees and positioned with the first surface of the blade **32** positioned downward. As will be further described, in such an embodiment, such variable orientation or registration of the key **22** and **24** does not affect the subsequent imaging, positioning or cutting of a key **22** and **24.** The key duplication machine **10** may be arranged such that logic used to analyze images and control the movement, alignment, and cutting of keys **22** and **24** may detect the orientation or registration of the key **22** and **24** and account for such orientation or registration during the duplication of a master key **22** so that the proper key cuts are made regardless of the positioning of the key blank **24** so as to promote user friendliness and speed of duplication.

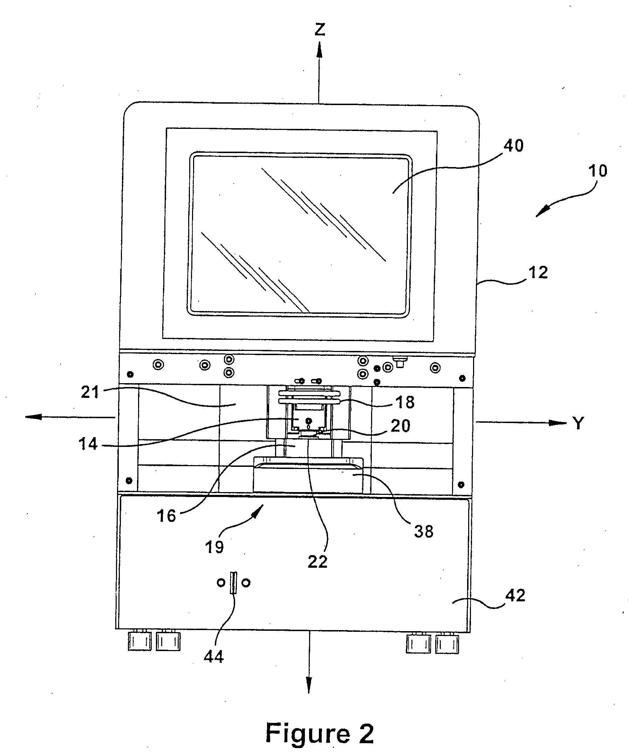

The door clamp **14,** base **16,** handle **18,** and slot **20** are located on a retention mechanism panel **21.** The panel **21** is arranged such that the panel **21** may slide to the left and right, with respect to Figure 2. As will be further described, such movement allows the machine **10** to move the blade **32** of a key blank **24** between an imaging zone, where an image of the blade **32** may be captured, and a cutting zone, where a key pattern **36** may be cut into a key blank **24.**

The key duplication machine **10** includes a table **38** located below the slot **20.** The table **38 is** positioned such that when a master key **22** is secured in the slot **20,** the table **38** holds additional keys on a key ring so that the user does not have to remove the master key **22** from its key ring for the purposes of duplication. A touch-screen monitor **40** is incorporated into the machine **10,** through which a user may enter information and information may be displayed to the user. In addition, a metal shavings drawer **42** is provided beneath the internal key cutting mechanisms to catch metal shavings generated during the cutting of keys. The shavings drawer **42** may be removed from the machine **10** to facilitate the disposal of collected shavings. For convenience, a de-burring slot **44** is provided. The slot **44** leads to a burr-cleaning member such as a wheel, square brush, or the like, to clean and de-burr newly cut keys.

Optionally, a vacuum system (not shown) may be incorporated into the machine **10** to capture key cutting shavings as they are generated and to assist in cleaning the work area after key cutting operations. Such a vacuum system may be attached to the machine **10** in the vicinity of the cutting operation or in or near a catch basin. Such an exemplary system is described in U.S. Patent Application No. 10/970,844, titled KEY CUTTING MACHINE, filed on October 20, 2004, and commonly owned by the present assignee. The 10/970,844 application describes a removable vacuum tube capable of capturing key cutting shavings and assisting in cleaning the work area after the key cutting operation. It will be clear to those skilled in the art that such a vacuum system could be incorporated into the present apparatus and attached in the vicinity of the cutting operation or in or near the catch basin.

As will be further described, during the process of duplicating or cutting a key, internal components, mechanisms, and systems of the key duplication machine **10** experience motion and movement relative to other components of the machine **10.** To facilitate the description of such motion and movements, reference will be made to movements relative to an X-axis, Y-axis, and Z-axis. The orientations of these axes are shown in Figures 1 through 3. When motion or movement is described herein as "moving along the X-axis," for example, this description includes motion along any axis parallel to the X-axis shown in Figures 1 through 3. Movements along the X-axis are generally between the front and back of the machine **10,** movements along the Y-axis are generally between the left side and right side of the machine **10,** and movements along the Z-axis are generally between the top and bottom of the machine **10.** As will be understood by those skilled in the art, descriptions of motion or movement along an axis are not intended to be exactly and precisely along or parallel to such an axis. Movement and motion that is approximately or roughly along an axis or parallel to an axis are included in the description of motion or movement along an axis. The use of "along an axis" or "about an axis" are intended to simplify a general description of the apparatus and methods described herein and not intended to limit the scope or understanding of such apparatus and methods.

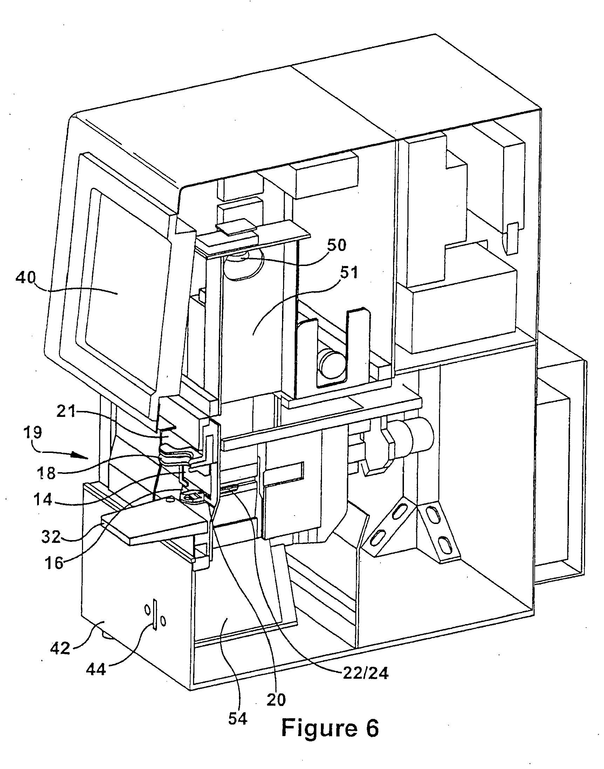

Figures 6 though 21 illustrate exemplary internal components, mechanisms, and systems of the key duplication machine **10** and will be referenced in describing methods for using the machine **10** to form duplicate keys from master keys **22.**

Referring again to Figure 5, a master key **22** or key blank **24** may be placed and retained in the slot **20** in the retention mechanism panel **21** such that the blade **32** is positioned within the machine **10** and in the imaging zone. As best seen in Figure 6, an optical imaging device **50** is mounted within the machine **10** and positioned such that it captures an optical image of a key **22** and **24** secured in the slot **20.** The image of the key **22** and **24** may generally include the blade **32** of the key **22** and **24,** the key shoulder **30,** and at least a portion of the head **26.** As generally used herein, the imaging area is an area that is below (along the Z-axis) the optical imaging device **50.** The optical imaging device **50** is generally positioned above the key **22** and **24** and directed downward such that a silhouette of the key **22** and **24,** including the blade **32** of the key **22** and **24,** may be captured.

In one embodiment, the optical imaging device **50** is a camera, and the image captured is a photographic image. In an embodiment, the camera **50** is a digital camera, and the image captured is a digital image. A digital image may be stored in file form or in data form and may be analyzed by logic. As best seen in Figure 6, a tube **51** (shown in cross-section) may extend downward from the imaging device **50** towards the key **22** and **24.** Such a tube **51** may facilitate the channeling of light to the camera and result in a high quality captured image.

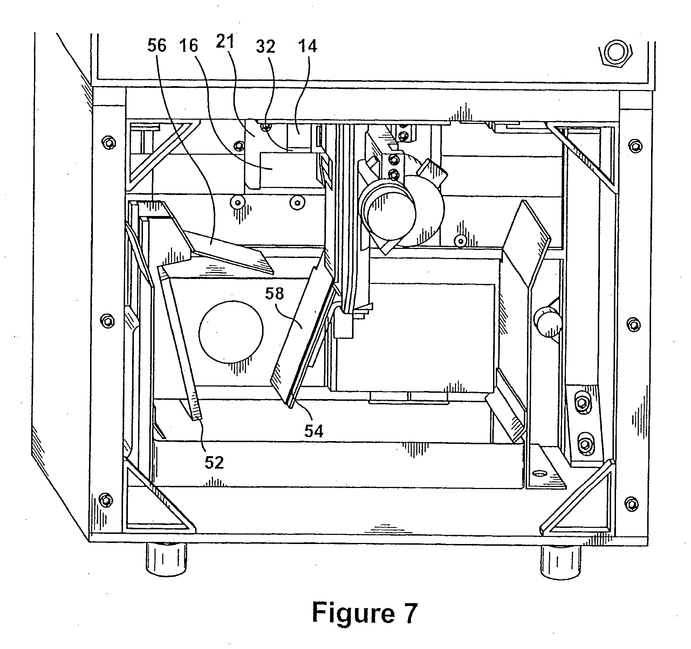

To enhance an image captured by the optical imaging device **50,** the machine **10** includes a system for providing backlighting to the key **22** and **24.** As best seen in Figure 7, a lighting panel **52,** reflector plate **54,** and a blocking plate **56** cooperate to provide backlighting to the key **22** and **24.** The lighting panel **52** emits light, which is reflected off the reflector plate **54** and directed towards the key **22** and **24.** A surface **58** of the reflector plate **54** is coated or otherwise treated to disperse and diffuse light emitting from the lighting panel **52.** This dispersion and diffusion of light creates a backlighting environment that enhances captured images of the key **22** and **24.** The coating or treatment of the surface **58** of the reflector panel **54** may be any coating or treatment that sufficiently disperses and diffuses light. For example, the surface **58** may be coated with a gritty substance, such as sandpaper; the surface **58** may be painted; the surface **58** may be machined or otherwise treated to roughen the surface **58;** or the surface **58** may include a pattern that disperses and diffuses light. The reflector plate **54** may be arranged at a relatively steep angle, as best seen in Figure 7, to decrease the likelihood that shavings from the cutting of keys may fall onto and stick to the surface **58** of the reflector plate **54.** Such an angle makes it likely that shavings falling onto the surface **58** will slide off the surface **58** and settle into the shavings drawer **42.** In an embodiment, any treatment or coating applied to the surface **58** of the reflector plate **54** is selected to match the color and reflectivity of any buildup of dust that may accumulate onto the surface **58** due to the cutting of keys above the reflection plate **54.**

The lighting panel **52** may include any type of light-emitting devices such as, for example, light bulbs, light emitting diodes (LED), liquid crystal displays (LCD), and the like. In an embodiment, the light panel **52** comprises a matrix of evenly spaced LEDs. Alternatively, LEDs may be unevenly spaced so as to create more favorable light dispersion and diffusion. In an embodiment, the light emitted from the lighting panel **52** may be in the red spectrum, which may, under certain circumstances, create crisper images of a key silhouette. As will be understood by those skilled in the art, other types of backlighting systems may include directing light on the shavings or an object in the shavings drawer **42.** Any particular configuration that provides well-dispersed and diffused light appropriate for backlighting is contemplated and incorporated herein. Alternatively, front lighting or providing light directly to the key **22** and **24** may also be used when capturing an image of the key **22** and **24.**

The logic may be arranged to analyze the backlighting and the resulting quality of a captured image. Based on such analysis, the backlighting may be adjusted, such as in direction or in intensity, to improve subsequent captured images. In addition, the positioning of the lighting panel **52,** reflector plate **54,** and a blocking plate **56** may also be adjusted to improve subsequent captured images.

The apparatus as described may be utilized to capture the image of the blade **32** of a master key **22,** including the key pattern **36.** Such a captured image may be analyzed by logic to quantify and specifically define the key pattern **36** of the master key. Such analysis may include quantifying and defining the depth, angle, and position of each tooth in the key pattern **36;** determining whether there is a key pattern **36** on one side of the key **22** (a single-sided key) or on both sides of the key **22** (a double-sided key); determining precisely where along the blade **32** the key pattern **36** begins and ends; and the like. In addition, surface features of the blade **32,** such as the presence, length, and width of a key groove **34,** may be determined. In one embodiment, surface features of the blade **32** may be determined by positioning the optical imaging device **50** to an angle with respect to the surface of the blade **32.** As will be further described, such information may be stored by the logic for subsequent use in selecting a key blank **24,** precisely cutting a key pattern into a key blank **24** and in comparing the key pattern cut into the key blank **24** and the key pattern **36** of the master key **22.**

The captured image of the blade **32** of the master key **22** may also be used to specifically determine the proper key blank **24** to use when duplicating the master key **22.** The captured image may be analyzed using logic to quantify and specifically define features of the master key blade **32** such as, for example, the size and shape of the shoulder **30,** the length and width of the blade **32,** whether the master key **22** is single-sided or double-sided, whether the blade **32** includes any steps or grooves, and the like. To facilitate the identification of a proper key blank **24,** the logic may compare the quantified and defined features of the master key **22** with data in a database regarding known key blanks **24.** Such a database may include data on the physical dimensions of known key blanks **24,** and the logic may make direct comparisons between physical dimensions of known key blanks **24** and the features of the master key **22** as determined from the captured image. Such comparisons may lead to the determination and selection of the proper key blank **24** for the master key **22.**

Optionally, additional imaging of the master key **22** may be performed to determine or quantify surface features of the master key **22** such as, for example, the keyway groove **34.** Such surface features may assist in narrowing or choosing the proper key blank **24.** Such imaging may be performed by providing a ring of structured light about the key blade **32** and an optical imaging device to record a tip view or cross-sectional view of the key **24,** performing a laser scan across the key blade **32** to identify the width and spacing of a keyway groove **34,** or projecting a shadow across the surface of the blade **32** to measure the variations in shadow contour related to surface area contour.

With regard to a laser scan of the key blade **32,** a dot scan may be utilized using a single laser dot that may be moved continuously along a path, projected at certain points along a path, or utilized with multiple laser dot scans in numerous types of configurations to acquire the necessary information. It should be clear that such a scan could read one or both sides of a key **22.** Information on the groove **34** may likewise be analyzed and compared by the logic to groove information stored in the database related to known key blanks **24.** Therefore, based upon the master key **24** silhouette and, optionally, the key groove **34** features, the logic may identify a single key blank **24** for use in duplicating the master key **24.**

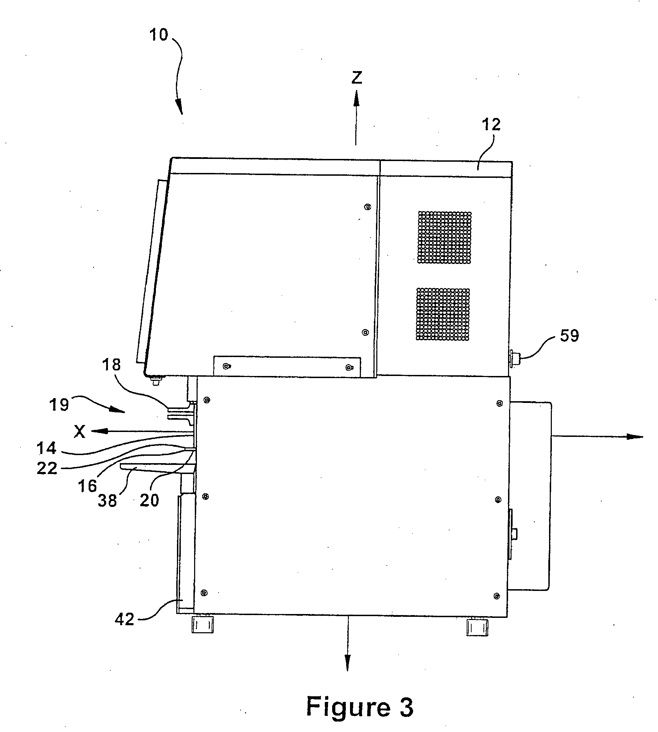

Once the proper key blank **24** is identified, the key duplication machine **10** may direct output information to the user to indicate which specific key blank **24** is identified. In one embodiment, such information may be displayed on the touch-screen monitor **40.** The user may then retrieve the proper key blank **24** from a retail display based on the displayed information. In an embodiment, various key blanks **24** may be displayed on a display or retail rack with light indicators positioned near each type of key blank **24.** Once the proper key blank **24** is identified, the machine **10** may send a signal to the display rack and the display rack may illuminate the light indicator associated with the proper key blank **24.** Such a system directs the user to the proper key blank **24** and reduces user error in selecting a key blank **24.** The machine **10** may include a display connection **59** (as seen in Figure 3) to connect the machine **10** to the display rack, through which a signal may be sent from the display rack from the machine **10.** Optionally, the machine **10** and display rack may be integrated or the machine **10** and rack may be arranged to send and receive signals remotely, wirelessly, etc. Such apparatus and methods are described in U.S. Patent Application No. 10/633,933, filed on August 4, 2003, and titled OBJECT IDENTIFICATION SYSTEM.

Once the proper key blank **24** is identified and retrieved by the user, the user may remove the master key **24** from the slot **20** in the retention mechanism panel **21** and place the key blank **24** in the slot **20.** When the key blank **24** is placed into the slot **20,** the key blank **24** may be validated to insure that the proper key blank was retrieved by the user, internal mechanisms may align the key blank **24,** the key blank **24** may be further secured or clamped, and a key pattern may be cut into the key blank **24** to duplicate the maser key **22.** As previously described, the orientation or registration at which the user inserts the key blank **24** in the slot **21** does not affect the subsequent operations on the key blank **24.** The logic may analyze captured images of the inserted blank **24** to determine the orientation and adjust all subsequent operations accordingly.

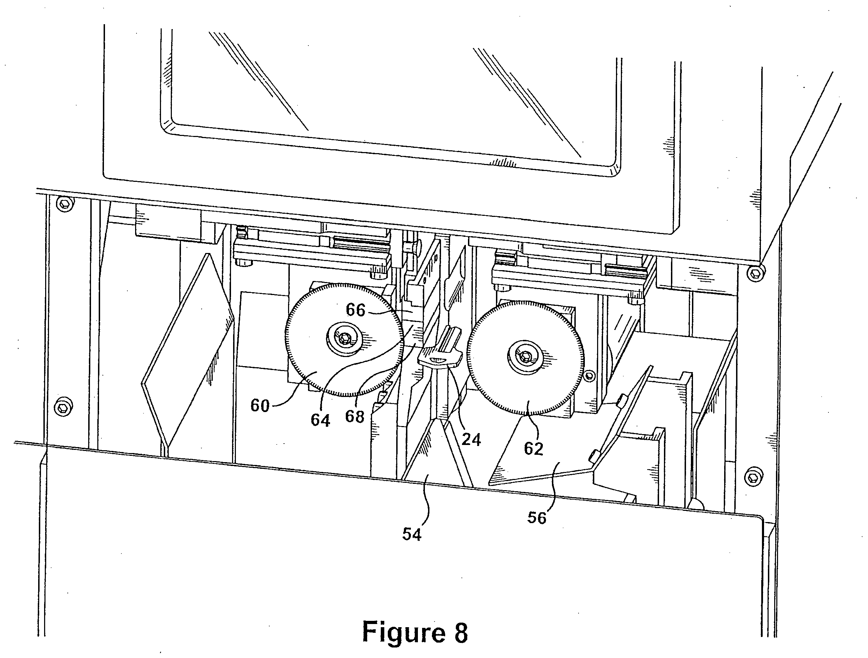

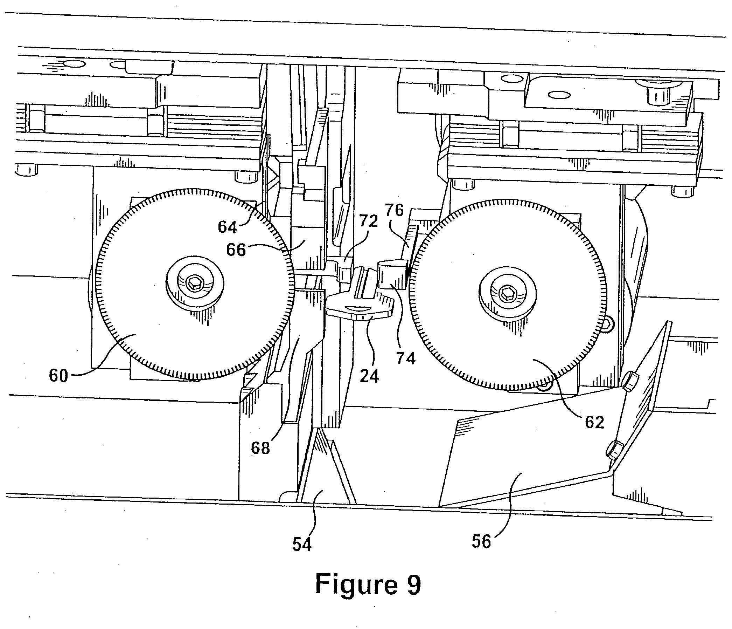

Figures 8 and 9 illustrate the positioning of a key blank **24** relative to internal components, mechanisms, and systems as it is initially inserted and secured in the slot **20.** In this initial position, the key blank **24** is in the imaging zone. The retention mechanism panel **21** is not shown in Figures 8 and 9 for clarity. As shown in Figure 8, a left cutting wheel **60** is positioned to the left of the key blank **24** and a right cutting wheel **62** is positioned to the right of the key blank **24** as viewed from the front of the machine **10.** A clamping assembly **64,** including a top clamp member **66** and a bottom clamp member **68,** is located to the left of the key blank **24** as viewed from the front of the machine **10.** The clamping assembly **64** is used to clamp the key blank **24** during cutting, the left cutting wheel **60** is utilized to cut the left side of the key blank **24,** and the right cutting wheel **62** is utilized to cut the right side of the key blank **24.**

The logic may validate that the key blank **24** selected by the user and positioned in the machine **10** is the proper key blank **24,** as previously identified. An image of the key blank **24** may be captured by the optical imaging device **50,** and logic may be used to analyze the image. Such analysis may determine or quantify features of the key blank **24** such as, for example, the size and shape of the shoulder **30,** the length and width of the blade **32,** whether the blank **24** is designed as a single-sided or double-sided key, whether the blade **32** includes any steps, and the like. Such determined features may be compared to data regarding features of the previously-identified proper key blank **24** stored in the database. Provided the determined features of the user-selected key blank **24** and the stored features of the previously-identified proper key blank are in agreement, the logic may determine that the proper key blank **24** was selected and positioned by the user. The user may be informed that the user-selected blank **24** is proper, and the duplication process may continue. If the determined features of the user-selected key blank **24** and stored features of the proper key blank are in not in agreement, the logic may inform the user that an improper key blank was selected and instruct the user to reselect a key blank **24** for duplication of the master key **22.** Optionally, the duplication process may be halted until the user positions a proper key blank **24,** or the machine **10** may incorporate an override function to allow a key pattern to be cut into the selected key blank **24.**

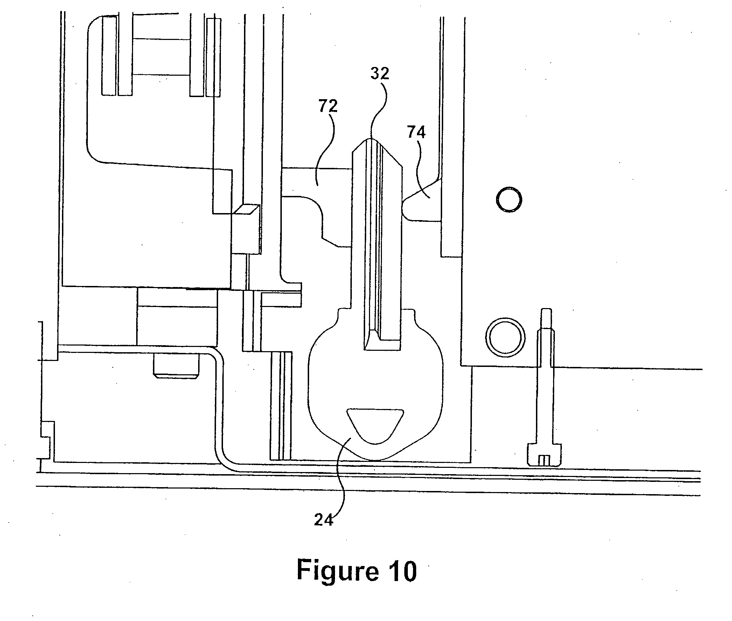

Prior to clamping the key blank **24** in the clamping assembly **64,** the key blank **24** may be aligned to insure a key pattern is properly cut into the blank **24.** The position of the key blank **24,** as initially manually positioned by the user, may be determined from the captured image of the blank **24.** This image is analyzed by logic and compared to the ideal position for cutting the blank **24,** and the positioning of the blank **24** is adjusted to conform to the ideal cutting position. As best shown in Figures 9 and 10, a pair of key positioner fingers **72** and **74** engages the key blank **24** to align the blank **24.** The left positioner finger **72** engages the left side of the blade **32,** and the right positioner finger **74** engages the right side of the blade **24.** This engagement squares the key blank **24** with respect to the X-axis and Y-axis to correct for a user having placed the blank **24** into the slot **20** at an angle. The engagement of the fingers **72** and **74** may also properly position the blade **32** along the X-axis. If the user did not insert the blank **24** far enough into the slot **20,** the fingers **72** and **74** may move the blade **32** along the X-axis to the proper position. As previously described, the retention mechanism **19** secures a blank key **24;** however, the force applied to a key **22** and **24** by the door clamp **14** and base **16** allows the key **22** and **24** to be adjusted relative to the machine **10.**

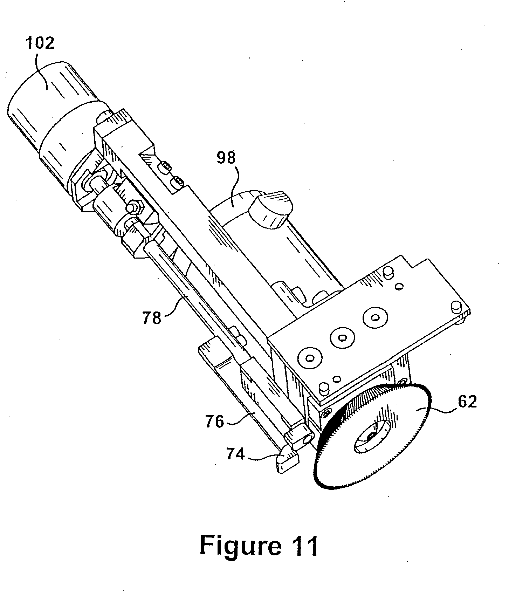

The left positioner finger **72** is generally fixed with respect to the blank **24.** This is to say that forces between the blank **24** and the left positioner finger **72** do not cause the left positioner finger **72** to deflect. The right positioner finger **74,** however, is designed to deflect slightly upon engagement with the blank **24.** The right positioner finger **74** includes a cantilever arm **76** that deflects due to forces between the right positioner finger **74** and the blank **24.** Such deflection insures that sufficient force is applied to the blank **24** by the fingers **72** and **74** to grip and align the blank **24.** When the fingers **72** and **74** are not needed, they may be rotated upwards and out of the way. As best shown in Figure 11, the right positioner finger **74** is mounted onto a shaft **78.** The shaft **78** is arranged to rotate about the X-axis to rotate the finger **74** upward and downward as needed. A similar arrangement rotates the left positioner finger **72** upward and downward.

Once the positioner fingers **72** and **74** have corrected the alignment of the blank **24** based on the analysis of the initial captured image, yet another image of the blank **24** may be captured to validate that the alignment is now proper. In addition to validating the alignment of the blank **24,** this captured image may be utilized to record reference points along the blade **32** such as the location of the key shoulder **30,** the location of the tip of the blade **32,** and the like. As will be further described, the logic may use such reference points, along with the determination of the orientation of the key blank **24,** to guide the cutting wheels **60** and **62** during the cutting process.

Although the alignment of a key is generally described with reference to the alignment of a key blank **24** upon the insertion of the blank **24** into the slot **20,** it will be readily understood by those skilled in the art that the positioner fingers **72** and **74** may be used, for example, to align a master key **22** prior to capturing an image of the key **22** to be analyzed by the logic.

As shown in Figure 9, once the blank **24** is properly aligned, the clamping assembly **64** may be opened to accommodate the clamping of the blank **24.** In an embodiment, the default position of the clamp assembly is open, and the clamp is closed only when clamping a key blank **24.** The bottom clamp member **68** is generally fixed, and the top clamp member **66** is arranged to move along the Z-axis. When the clamping assembly **64** is opened, the blank **24** is moved to the left along the Y-axis until the blank **24** is positioned between the top member **66** and bottom member **68** clamps. The blank **24** is moved along the X-axis to a specific clamping position relative to the clamping assembly **64** as determined by the logic for the specific key blank **24.** The logic may specifically position the blank **24** relative to the clamping assembly **64** such that both edges of a blade **32** of a key blank **24** remain exposed for the cutting of a key pattern into both edges of the blade **32.** Such an arrangement is common for double-sided key blanks.

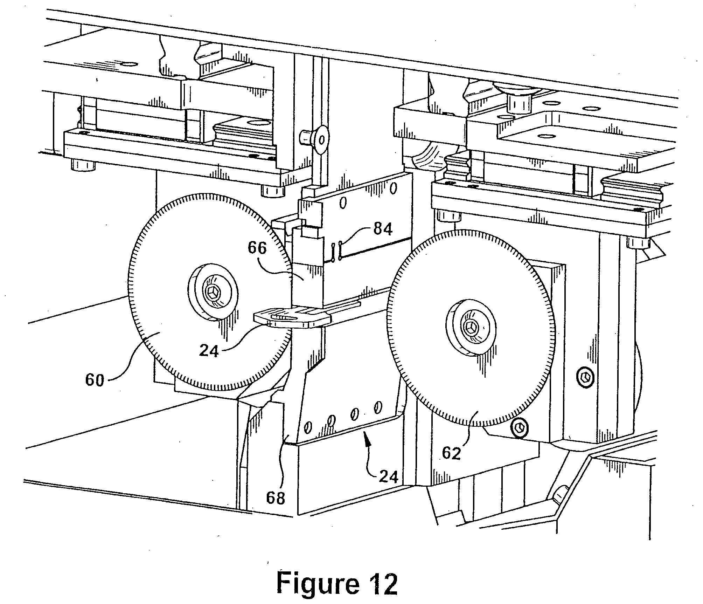

Such movement of the key blank **24** moves the blank **24** from the imaging zone to the cutting zone. The clamp assembly **64** is generally fixed with respect to the Y-axis and generally defines the cutting zone. The blank **24** is moved along the Y-axis by the synchronized movement of the left **72** and right **74** positioner fingers and the retention mechanism panel **21,** which includes the slot **20.** As seen in Figure 12, once the blank **24** is positioned between the top **66** and bottom **68** clamp members, the top clamp member **66** is moved downward along the Z-axis to secure the blank **24** in the clamp assembly **64.** Once the blank **24** is secured in the clamp assembly **64,** the positioner fingers **72** and **74** are rotated upward about the X-axis and out of engagement with the blank **24.** Such movement of the fingers **72** and **74** ensures that the cutting wheels **60** and **62** have access to the full length of the blade **32** and both edges of the blade **32.**

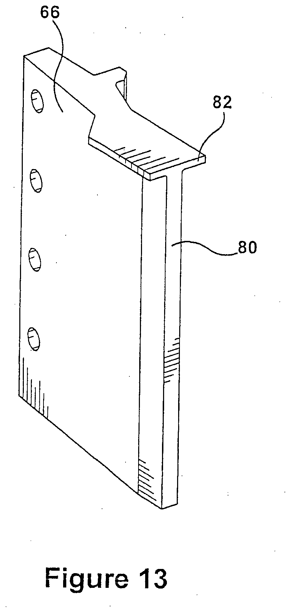

With reference to Figure 13, the clamping surface of the clamp members **66** and **68** are T-shaped. The stem **80** of the T-shaped clamping surface is sized such that both the left side and right side of the key blank **24** blade **32** is exposed to the cutting wheels **60** and **62** when the blank **24** is clamped in the clamping assembly **64.** The bar portion **82** of the T-shaped clamping surface is designed to engage the blank **24** at or above the key shoulder **30** and above the portion of the blade **32** into which a key pattern is cut. Optionally, the clamping surface may include knurls or other features designed to improve the grip of the clamp members **66** and **68** on the blank **24.** As best seen in Figure 12, the top clamp member **66** may include at least one groove **84** designed to allow a top clamp member **66** to deflect slightly. Such slight deflections may allow the clamping surfaces of the clamp members **66** and **68** to adjust for small irregularities in the surface of the blank **24.** For example, the top clamp member **66** may displace slightly so as to accommodate raised logos, words, or numbers stamped or forged into the surface of the blank **24.** Such accommodations may reduce or eliminate the chance of point contact between the clamping members **66** and **68** and the blank **24** and increase the chances that the clamping force is sufficient to hold the blank **24** during the cutting process.

Once the key blank **24** is clamped, the cutting operation can be performed. The logic may use the quantified and stored information from the captured image of the key pattern **36** of the master key **22** to calculate precise movements of the cutting wheels **60** and **62,** with respect to the key blank **24,** to produce a duplicate key. The movements of the cutting wheels **60** and **62** are generally two-dimensional. The wheels **60** and **62** are moved along the X-axis to cut the key pattern along the length of the blade **32.** In addition, the wheels **60** and **62** move independently along the Y-axis to cut the depth of each tooth of the key pattern into the blade **32.** While numerous paths for the cutting wheels **60** and **62** may be utilized, in an embodiment, the cutting wheels **60** and **62** begin near the shoulder **30** of the key blank **24** and proceed to the tip of the key blank **24** blade **32** to cut the key pattern into the blade **32.** The precise movements calculated for the cutting wheels **60** and **62** may be transferred to a 2-axis CNC cutter so that the key pattern **36** of the master key **22** may be duplicated on the blade **32** of the key blank **24.**

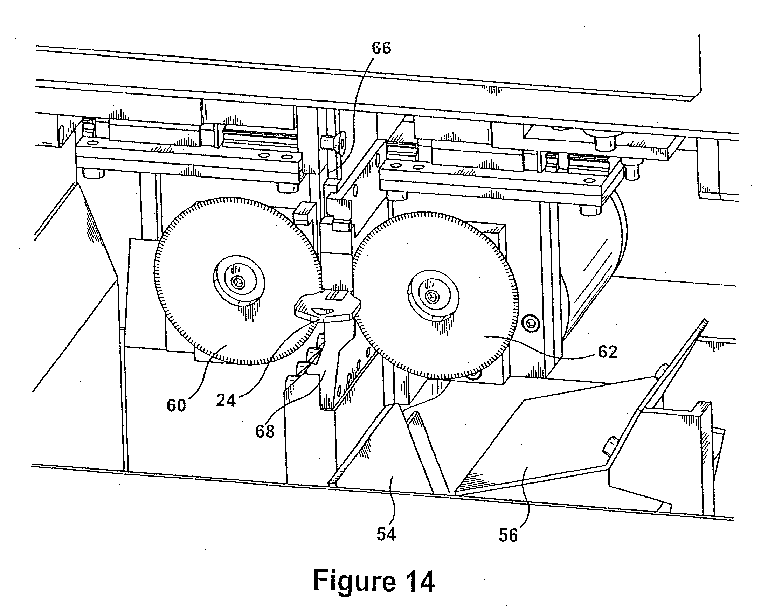

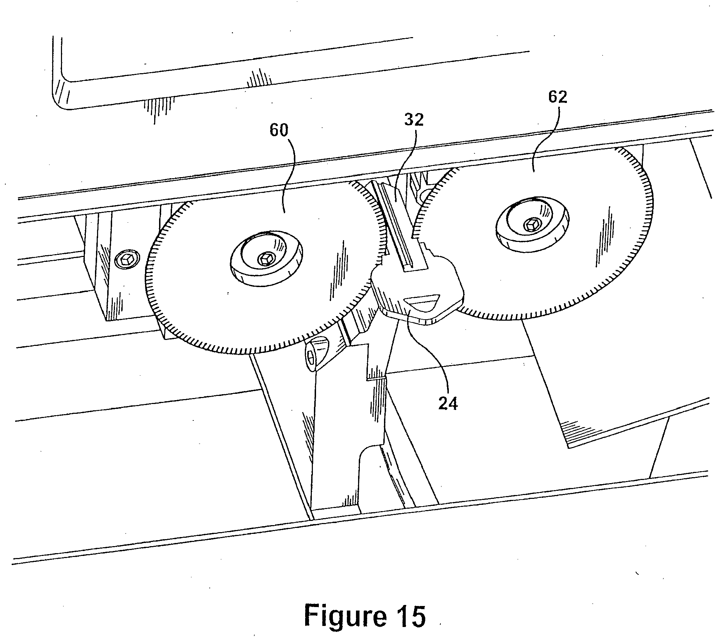

As shown in Figures 14 and 15, once the key blank **24** is clamped and the positioning fingers **72** and **74** are rotated out of the way, the cutting wheels **60** and **62** may be moved along the Y-axis, into the cutting zone, and into engagement with the blade **32.** Typically, the wheels **60** and **62** engage the blank **24** near the shoulder **30** of the blank **24.** The clamp assembly **64** is not shown in Figure 15 for clarity. As previously described, the cutting wheels **60** and **62** may move in parallel along the X-axis as the key pattern is cut into the blank **24;** however, the movements of each cutting wheel **60** and **62** along the Y-axis are independent. This independent movement insures that a double-sided key may be produced quickly and efficiently, with the cutting wheels **60** and **62** passing along the length of the blade **32** only once. The rotational speed of each cutting wheel **60** and **62** is also independently controlled. In one embodiment, the rotational speed of each cutting wheel **60** and **62** is adjusted based on the depth at which the cutting wheel **60** and **62** is moved into the blade **32** along the Y-axis. For example, in an embodiment, the rotational speed of a cutting wheel 60 and **62** is slowed as the wheel **60** and **62** moves deeper into the blade **32** along the Y-axis. In an embodiment, the movement of the wheels **60** and **62** along the X-axis and Y-axis are adjusted based on the features of the cut. For example, for deeper cuts into the blade **24,** the movement of the wheels **60** and **62** in the Y-direction may be slowed, and for shallower cuts, the movement of the wheels **60** and **62** in the Y-direction may be increased. Such arrangements limit wear and service time of the cutting wheels **60** and **62.**

If the master key **22** is a single-sided key, only one of the cutting wheels **60** and **62** is engaged with the blank **24** to cut the key pattern **36.** The logic may make a determination on whether the left **60** or right **62** cutting wheel is to be utilized based on the captured image of the key blank **24.** The user may insert the blank **24** into the slot **20** without regard to the orientation of the blade **24.** The logic may determine from the captured image whether the key pattern should be cut into the left edge or the right edge of the key blank **24** based on the contour and shape of the shoulder **30** of the blade **32,** the tip of the blade **32,** or any other characteristic that may distinguish the edges of the blade **32.**

Once the key pattern is cut into the key blank **24,** the top clamp member **66** may be lifted along the Z-axis, releasing the newly-cut key. The newly-cut key remains secured by the retention mechanism **19.** The newly-cut key may be returned to the imaging zone by moving the retention mechanism panel **21** to the right along the Y-axis. A new image of the newly-cut key may be captured and compared to the captured image of the master key **22.** Logic may utilize such a comparison to validate that the newly-cut key is within acceptable deviation from the master key **22.** The deviation of the newly-cut key as compared to the master key **22** may be quantified by any statistic method. For example, a number of measurements along the key pattern **36** of the master key and the key pattern of the newly-cut key may be taken and quantified. The average difference of the comparable measurements may be used to calculate an average difference and compare that average difference to a predetermined limit. The results of such a validation may be displayed to the user on the touch-screen monitor **40** or otherwise output to the user.

Once the validation is completed, the user may lift the spring-biased door clamp **14** using the handle **18** and remove the newly-cut key from the slot **20.** The logic may be arranged to retain the captured image of the master key **22** for a period of time, such that the user may place another proper key blank **24** into the slot **20** and cut yet another duplicate key. If no additional duplicate keys are required, the logic may discard the captured image of the master key **22** and prepare to receive another master key **22** and begin the duplication process anew. Such processes may be driven by the logic with regard to time limits or may be driven by the user inputting information through a touch screen or other user interface.

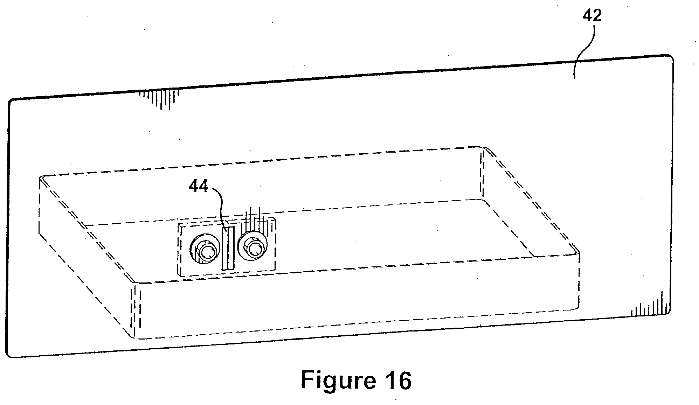

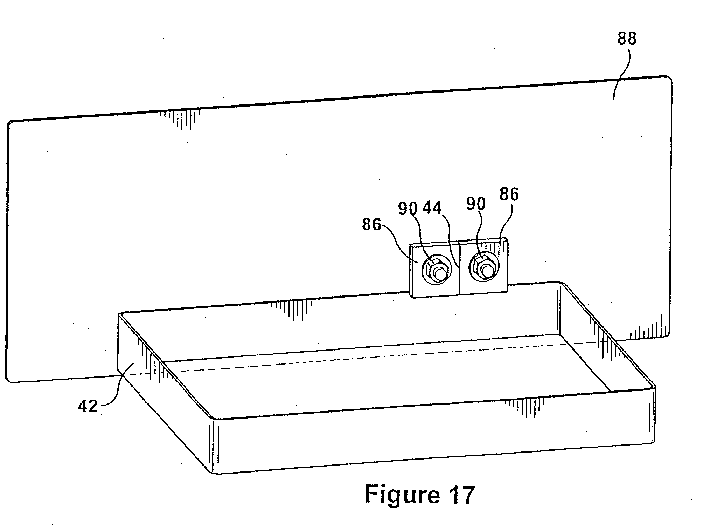

When a newly-cut key is removed from machine, the user may de-burr the key by inserting the blade of the newly-cut key into the de-burring slot **44.** As shown in Figures 16 and 17, a pair of de-burring brushes **86** may be secured to an interior surface **88** of the shaving drawer **42** and proximate to the de-burring slot **44.** The brushes **86** are positioned such that the blade of the newly-cut key engages the brushes as the blade is inserted into the slot **44.** As seen in Figure 17, the brushes may be square and secured to an interior surface **88** of the shavings drawer **42** with fasteners **90** such as, for example, a bolt and nut combination. Such a fastening arrangement allows for efficient exchanging of de-burring brushes **86.** In addition, the square shape of the brushes **86** allows the brushes **86** to be rotated or flipped as one side of a brush **86** becomes worn due to repeated use, thus increasing the service life of a brush **86.** Such an arrangement may provide for sixteen unique positions for the pair of brushes **86.**

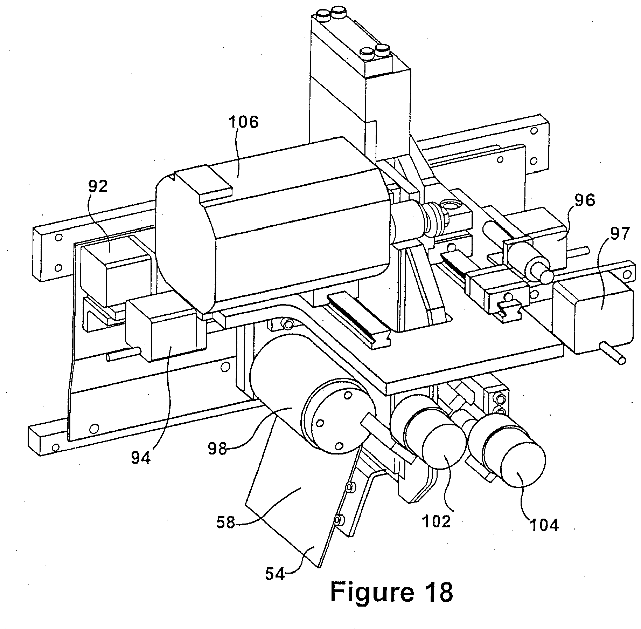

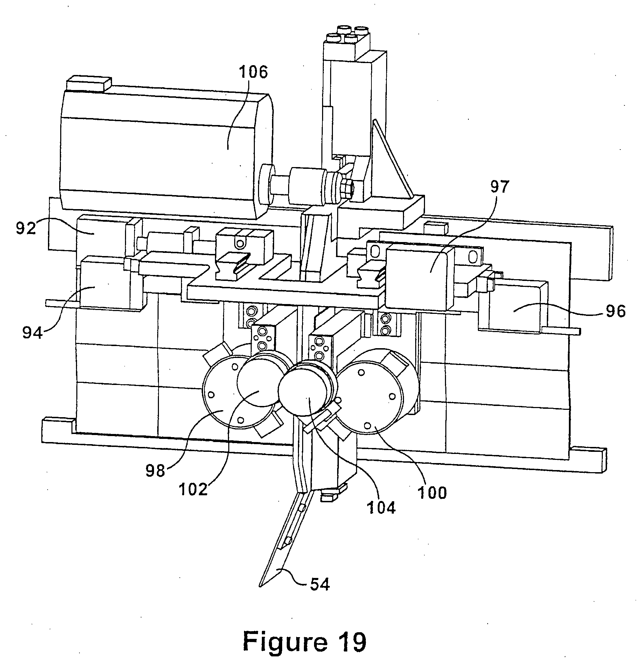

As described above, the process of cutting duplicate keys relies on the movement of numerous interior components, mechanisms, and systems. Such movement is generally facilitated through a number of motors mounted within the key duplication machine **10.** Figures 18 and 19 illustrate the interior of the machine **10** as viewed from the rear of the machine **10.** As shown in Figures 18 and 19, the key duplication machine **10** includes nine independent motors to facilitate movement within the machine **10.**

A retention mechanism slide motor **92** is coupled to the retention mechanism panel **21** to move the retention mechanism panel **21** along the Y-axis. Such movement occurs as a key blank **24** is moved between the imaging zone and the cutting zone.

A first slide motor **94** is coupled to both the right cutting wheel **62** and the right positioner finger **74** to move the right cutting wheel **62** and the right positioner finger **74** along the Y-axis. A second slide motor **96** is coupled to both the left cutting wheel **60** and the left positioner finger **72** to move the left cutting wheel **60** and the left positioner finger **72** along the Y-axis. Such movement of the positioner fingers **72** and **74** and the cutting wheels **60** and **62** occur under a number of conditions. For example, when the fingers **72** and **74** are engaged with the blade **32** of a key blank **24,** movement of the fingers **72** and **74** along the Y-axis may move the blank **24** between the imaging zone and the cutting zone. In another example, when a key blank **24** is secured in the clamping assembly **64** and the fingers **72** and **74** are rotated out of engagement with the blade **32,** the cutting wheels **60** and **62** may be independently moved along the Y-axis to facilitate the cutting of the key pattern **36** into the blade **32.**

A third slide motor **97** is coupled to both the left **60** and right **62** cutting wheels to move the cutting wheels **60** and **62** together along the X-axis. Such movement along the X-axis occurs as the wheels **60** and **62** move along the length of the blade **32** to cut the key pattern **36** into the blade.

A first rotational motor **98** is coupled to the right cutting wheel **62** to rotate the right cutting wheel **62** about the X-axis as the wheel **62** cuts a key pattern **36** into the right edge of a key blank **24** blade **32.** A second rotational motor **100** is coupled to the left cutting wheel **60** to rotate the left cutting wheel **60** about the X-axis as the wheel **60** cuts a key pattern **36** into the left edge of a key blank **24** blade **32.**

A third rotational motor **102** is coupled to the right positional finger **74** to rotate the finger **74** about the X-axis to engage and disengage the finger **74** with the blade **32** of the key blank **24.** A fourth rotational motor **104** is coupled to the left positional finger **72** to rotate the finger **72** about the X-axis to engage and disengage the finger **72** with the blade **32** of the key blank **24.**

A clamp motor **106** is coupled to the top clamp member **66** to move the top clamp member **66** along the Z-axis. Such movement clamps and unclamps a key blank **24** in the clamp assembly **64** prior to and after the cutting of key patterns **36** into the blade **32** of a blank **24.**

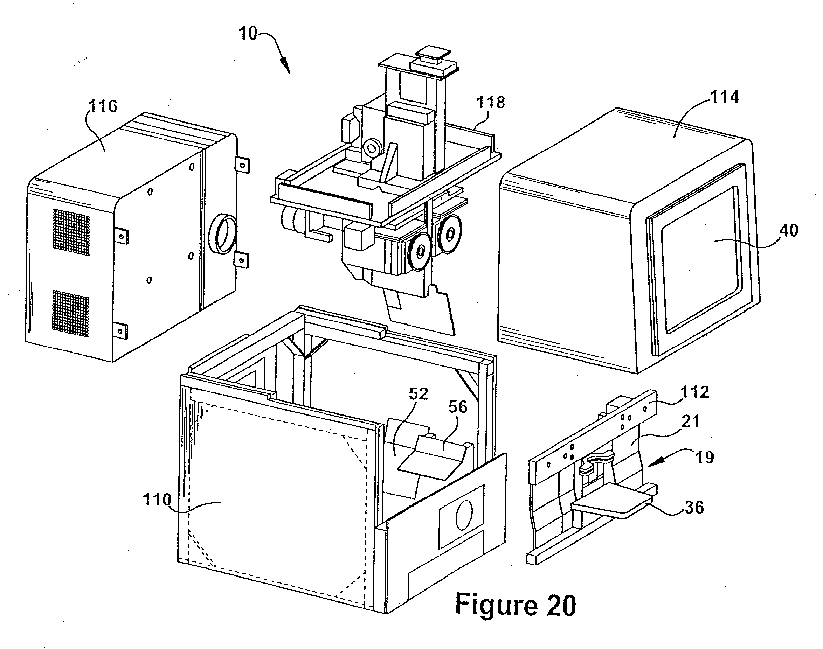

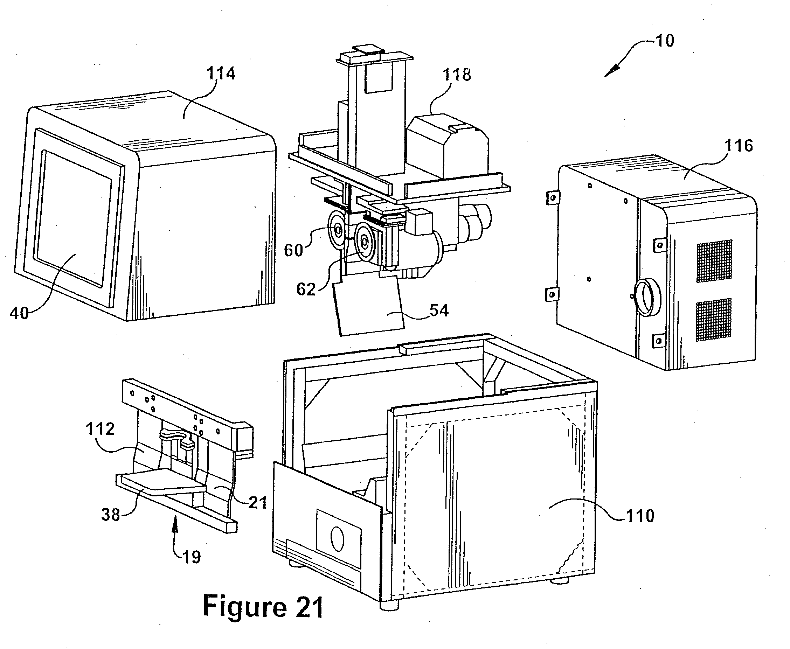

The key duplication machine **10** as described herein may be designed and fabricated as an assembly of modular components. In an embodiment, as shown in Figures 20 and 21, the machine **10** may be assembled from five modular components. Such modular components may include a base module **110,** a front panel module **112,** a hood module **114,** a computer module **116,** and a support plate module **118.** The base module **110** supports the machine **10** and may provide structural support for the mounting or holding of components such as, for example, the shavings drawer **42** and the lighting panel **52.** The front panel module **112** may provide structural support for the mounting or holding of components such as, for example, the door clamp **14,** base **16,** handle **18,** retention mechanism panel **21,** and retention mechanism slide motor **92.** The hood module **114** may provide structural support for the mounting or holding of components such as, for example, the monitor **40,** wiring chassis, and power supplies. The computer module **116** may provide structural support for the mounting or holding of components such as, for example, a hard drive, a central processing unit, circuit boards, logic units, and other such computer related components. The support plate module **118** may provide structural support for the mounting or holding of internal components of the machine **10.** For example, the support plate module **118** may support a number of motors, such as the rotational motors **98, 100, 102,** and **104** for rotating the cutting wheels **60** and **62** and positioner fingers **72** and **74;** slide motors for positioning the wheels and positioner fingers **94, 96,** and **97;** and the clamp motor **106.** In addition, the support plate module **118** may support components such as the optical imaging device **50,** reflector plate **54,** the cutting wheels **60** and **62,** positioner fingers **72** and **74,** etc. Such modular design and assembly increases the ease of manufacture, assembly, and maintenance of a key duplication machine **10.**

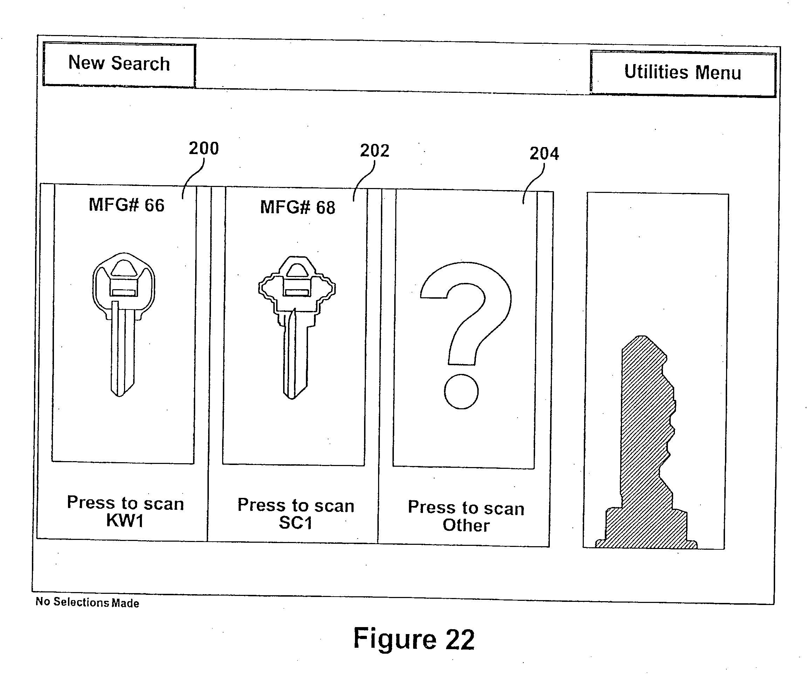

The process of duplicating a key using the key duplication machine **10** as described above may be facilitated through the interaction of a user with a user interface. For example, the user may be given a number of optional methods for identifying a proper key blank for the duplication of a master key. Such options may be displayed on a user interface such as, for example, a touch-screen monitor. Once displayed on a touch-screen monitor, the user may initiate the duplication process by manually selecting one of the offered options. A first option may request that the key duplication machine determine the proper key blank by taking a photograph of the master key, as described herein, and comparing the physical characteristics of the master key to a database containing physical characteristics of key blanks. The results of such a comparison may yield more than one potentially appropriate key blank. As illustrated in Figure 22, the user interface may graphically display two or more key blanks that may be used to duplicate the master key. The user may select the preferred key blank by touching a graphic representation of one of the key blanks **200** and **202.** Alternatively, the user may select a graphic **204** indicating the user intends to insert another master key into the machine.

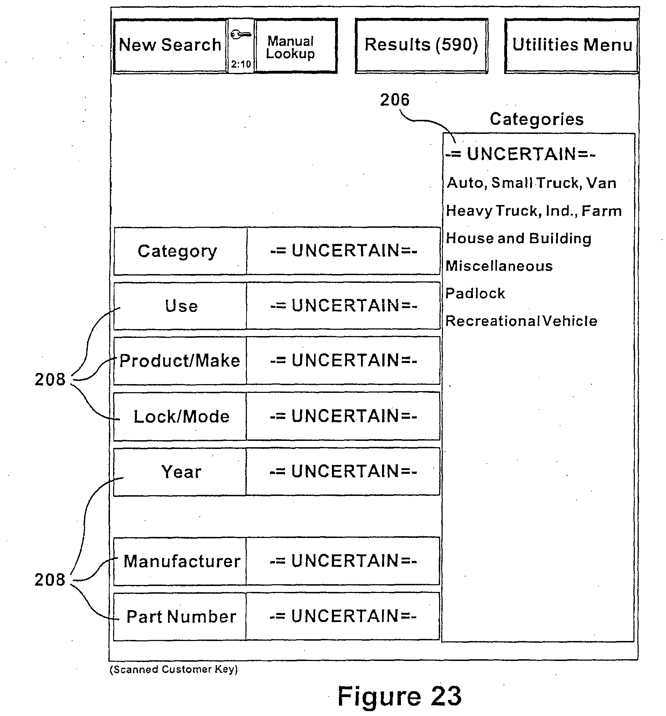

Another option for identifying a proper key blank for the duplication of a master key is for a user to provide specific known information regarding the master key. As shown in Figure 23, the user may enter specific information regarding a master key through a touch-screen monitor. The user may select specific information regarding a key from a dynamically populated selection box **206.** The user may utilize the selection box to provide information such as the category of the key (automobile, house, padlock, etc.), the use, the make, the model of lock, the year lock was manufactured, the name of the manufacturer, or the part number of key or lock. The user may toggle the information displayed in the selection box **206** by touching buttons **208** associated with the different types of information. The user may select information for the selection box **206** by simply touching the correct information in the selection box **206.**

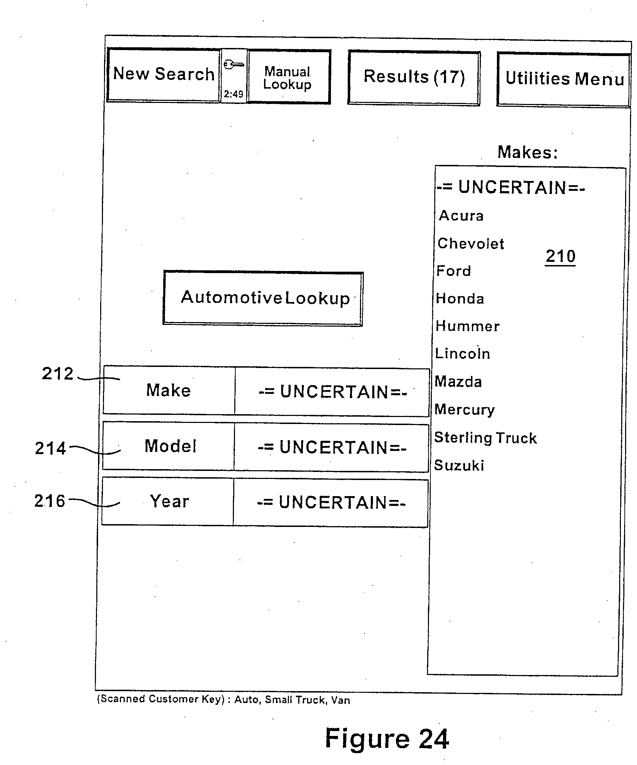

Figure 24 illustrates a user interface directed specifically to automobile keys. The user may enter specific information regarding an automobile master key to identify the proper key blank. The user may select information such as automobile make, model, and model year from a dynamically populated selection box **210.** The information in the selection box **210** may be toggled by touching an automobile make button **212,** an automobile model button **214,** and a model year button **216.**

In each of the options described above, specific information entered by the user may be compared to a database containing information regarding key blanks. Such a comparison may be used to identify the proper key blank. Once the proper key blank is identified, the key blank may be displayed on the user interface to inform the user which key blank should be retrieved by the user.

Regardless of the method used to identify a key blank, the machine may be arranged to warn a user that a master key to be copied may contain a computer chip, transponder, or the like. Such computer chips and transponders are common in automobile keys. Duplicates for such keys may need to include a corresponding computer chip in order for the duplicate to be successful. Once it is determined that a master key may have a computer chip, the user may be instructed to place the master key in or near a device designed to sense the presence of a computer chip in a key. If the master key does include a computer chip, the user may be instructed on how to proceed to ensure a functional duplicate key is made.

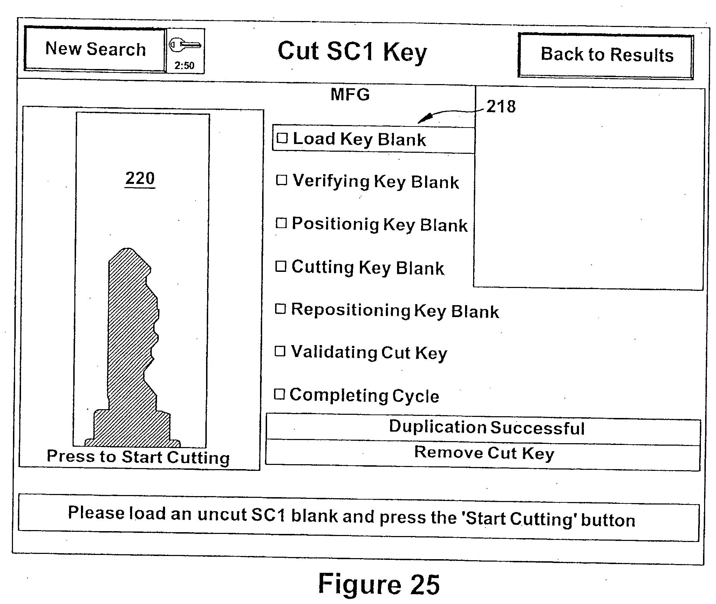

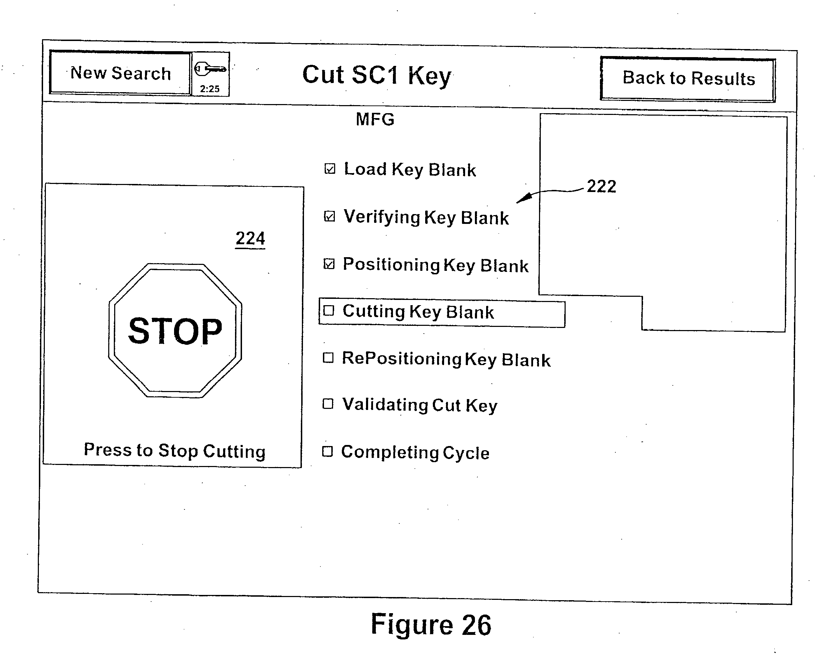

Once a proper key blank is identified and retrieved by the user, the user interface may further guide the user in duplicating the master key and displaying the progress of duplication of the key. As shown in Figure 25, a list of actions **218** may be displayed on the user interface. The first action shown instructs the user to load a key blank. The user may remove the master key and insert the proper key blank and press a box **220** to initiate the key duplication process. The key duplication machine **10** may then proceed with additional actions such as scanning the blank and verifying the proper blank is loaded, positioning the key blank to insure proper alignment, cutting the key blank, etc. As shown in Figure 26, as actions are completed, checks may be displayed in boxes **222** to indicate that an action has been completed. The user interface may also include a graphic to terminate the cutting process. For example, a user may touch a graphic of a stop sign **224** to stop the cutting process.

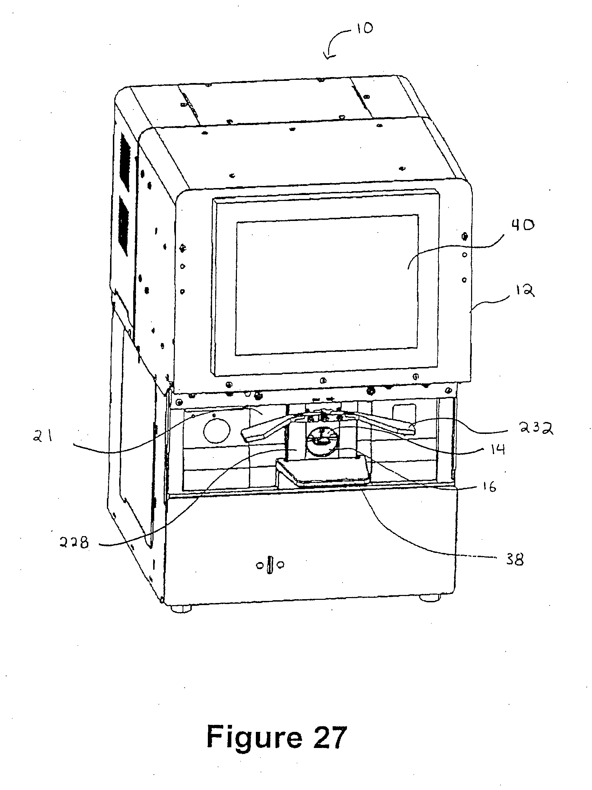

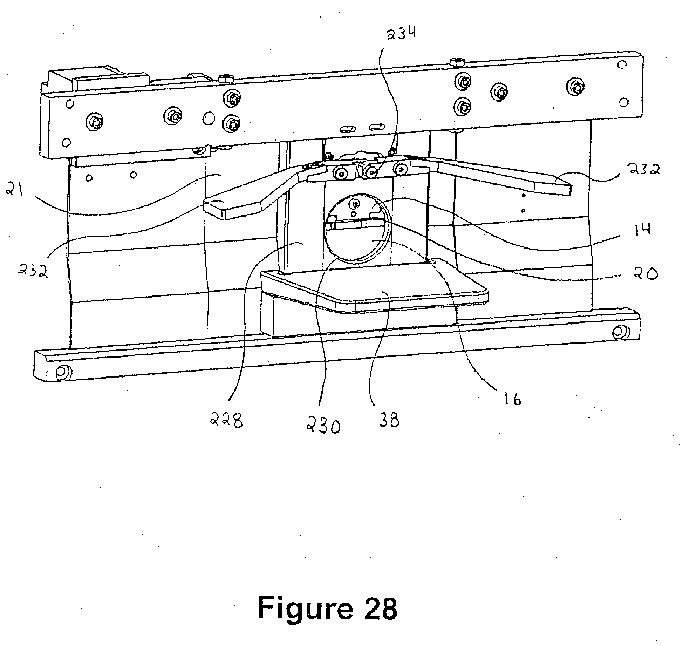

In an embodiment, best illustrated in Figures 27-29, the key duplication machine **10** may include a read/write device **226** to interface with a microchip or circuit board embedded within a key. The read/write device **226** may be any type of transponder or receiver, such as an antenna. While the read/write device **226** will be referred to as an antenna **226,** it will be appreciated that the read/write device **226** may be any read/write device known in the industry.

The antenna **226** may be positioned on the key duplication machine **10** to interface with a master key **22** or key blank **24** located in the slot **20.** For example, the retention mechanism panel **21** may include an outer shell **228** disposed about the slot **20.** The outer shell may comprise an opening **230.** The opening **230** may be any appropriate size or shape, such as circular, square, or any other appropriate shape. The opening **230** may surround the slot **20** allowing a key to be passed through the opening **230** into the slot **20.**

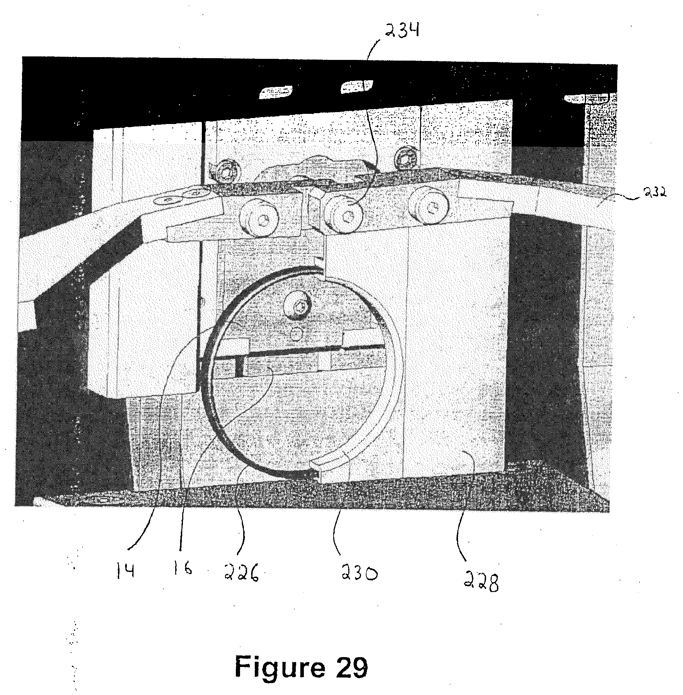

The antenna **226** may be positioned about the opening **230.** For example, as illustrated in the cut-away view of Figure 29, the antenna **226** may be embedded in the outer shell **228,** such as wrapped about a circular opening **230.** The antenna **226** may surround a key inserted into the slot **20** to facilitate both reading data and information on an existing master key **22** and writing to the new key blank **24.** It will be appreciated that a single antenna **226** may be provided to perform both the read and write functions. However, in an embodiment, multiple antennas **226** may be used to perform the read and write functions at one or more frequencies.

Traditionally, chip key readers and writers were designed with the antenna disposed away from metal objects and other electronics. General consensus from designers of such read/write devices was that such objects and electronics would provide interference with the signals received and transmitted by the antenna. Interference can also occur between antennas when multiple antennas are present. After much analysis, development and experimentation, the embodiments described herein were successfully designed to integrate one or more antennas into the key load position. Specifically, in an embodiment, a pair of antenna windings is precisely disposed about the opening **230** such that the read and write functionalities are not affected by the surrounding metal or each other.

The primary reason to integrate the read/write device **226** may be to integrate the reading of the microchip or circuit board embedded within a master key **22** and write an appropriate functional code to a microchip or circuit board embedded on a key blank **24.** An additional and important benefit is that the information read from a master key **22** may be used to assist in the identification of the master key **22.** The database of key blanks **24** may include data related to information that may be read from a microchip or circuit board embedded with a master key **22.** To facilitate the identification of a proper key blank **24,** the logic may compare the data read from a master key **22** to the data stored in the database for known key blanks **24.** Such comparisons can be used to help in the determination and selection of the proper key blank **24** for the master key **22**

The key duplication machine **10** may include one or more manual levers **232** for actuating the door clamp **14.** As illustrated in Figures 27-29, the retention mechanism panel **21** may include two levers **232.** The levers **232** may be any appropriate size and shape, such as flat and elongated. Further, the levers **232** may be positioned at any appropriate position, such as connected to the outer shell **228** and positioned above the opening **230.**

In an embodiment, the key duplication machine **10** includes two levers **232.** The levers **232** may be interconnected with one another at a pivot point **234.** Each lever **232** may pivot about the pivot point.

The levers **232** may facilitate opening of the slot **20.** For example, pressing down on the lever **232** may facilitate upward movement of the door clamp **14,** while lifting up on the lever **232** may facilitate downward movement of the door clamp **14.** It will be appreciated that other mechanical components, such as gears, bearings, connecting arms, and other mechanical components may be utilized to facilitate the motion transfer from the levers **232** to the door clamp **14.**

The logic may be arranged to collect and store data regarding key duplications performed by the key duplication machine **10.** For example, data regarding the number of key duplications performed, the number of different key blanks used in key duplication, the number of an individual key blank used in key duplication, success rate of duplicating keys, and the like may be collected and stored. Such information and data may be analyzed by the logic associated with the machine **10** or be downloaded for remote analysis.

## Claims

1. A key duplication machine (10) comprising:
a key blank identification system comprising:
an outer shell (228) having an opening (230) to receive a key (22, 24) including a microchip embedded therein;
a read/write device (226) positioned on the key duplication machine to interface with said key located in the opening wherein said read/write device is configured to transmit data to said key and configured to receive data from said key located at said opening; and
an optical imaging device (50) is mounted within the machine and positioned such that it captures an optical image of said key at said opening.

2. The key duplication machine of claim 1 wherein said key is a master key (22).

3. The key duplication machine of claim 1 wherein said key is a key blank (24).

4. The key duplication machine of claim 2 wherein the key blank identification system includes a database and a logic wherein said optical imaging device captures an image of the master key, said logic identifies features of the master key, and said logic compares said features of the master key with data in a database.

5. The key duplication machine of claim 3 wherein said optical imaging device captures an image of the key blank in the opening and said logic validates said key blank.

6. The key duplication machine of claim 1 further comprising a key cutting system that includes at least one cutting member (60, 62).

7. The key duplication machine of claim 6, wherein the key duplication machine incorporates the blank identification system and the key cutting system into a single apparatus.

8. The key duplication machine of claim 6 wherein the key cutting system further comprises a lighting panel (52) and a reflector plate (54) to provide backlighting to said key in the opening.

9. The key duplication machine of claim 4 wherein said master key is imaged and compared with a plurality of key blanks to aid in determining an appropriate key blank while utilizing the image to provide key pattern information to be cut into a key blank.

10. The key duplication machine of claim 1 further comprising a user interface (40).

11. A method of duplicating keys, comprising:
positioning an antenna (226) on the key duplication machine (10) to interface with a master key (24) having a microchip embedded therein;
passing said master key through an opening (230) in an outer shell (228);
reading data from said master key;
capturing an image of said master key at said opening (230) with an optical imaging device (50); and
comparing the data from said master key to data stored in a database for known key blanks to identify a proper key blank corresponding to the master key.

12. The method of claim 11 further comprises comparing features of the master key with data in a database corresponding to known key blanks.

13. The method of claim 11 further comprises cutting a key pattern into the proper key blank, the key pattern corresponding to a key pattern of the master key.

14. The method of claim 11 wherein the steps of reading data from said master key and cutting said key pattern are performed on a single apparatus.

15. The method of claim 11 further comprising storing information associated with a plurality of key blanks on said database.

## Patentansprüche

1. Schlüsselduplizierungsmaschine (10), umfassend:
ein Schlüsselrohling-Identifikationssystem, umfassend:
ein Außengehäuse (228), das eine Öffnung (230) aufweist, um einen Schlüssel (22, 24) mit einem darin eingebetteten Mikrochip aufzunehmen;
eine Lese-/Schreibvorrichtung (226), die auf der Schlüsselduplizierungsmaschine angeordnet ist, um sich mit dem Schlüssel zu koppeln, der sich in der Öffnung befindet, wobei die Lese-/Schreibvorrichtung ausgestaltet ist, Daten an den Schlüssel zu senden, und ausgestaltet ist, Daten von dem Schlüssel zu empfangen, der sich an der Öffnung befindet; und
eine optische Bildgebungsvorrichtung (50), die innerhalb der Maschine angebracht und so angeordnet ist, dass sie ein optisches Bild des Schlüssels an der Öffnung aufnimmt.

2. Schlüsselduplizierungsmaschine nach Anspruch 1, wobei der Schlüssel ein Masterschlüssel (22) ist.

3. Schlüsselduplizierungsmaschine nach Anspruch 1, wobei der Schlüssel ein Schlüsselrohling (24) ist.

4. Schlüsselduplizierungsmaschine nach Anspruch 2, wobei das Schlüsselrohling-Identifikationssystem eine Datenbank und eine Logik umfasst, wobei die optische Bildgebungsvorrichtung ein Bild des Masterschlüssels aufnimmt, die Logik Merkmale des Masterschlüssels identifiziert und die Logik die Merkmale des Masterschlüssels mit Daten in einer Datenbank vergleicht.

5. Schlüsselduplizierungsmaschine nach Anspruch 3, wobei die optische Bildgebungsvorrichtung ein Bild des Schlüsselrohlings in der Öffnung aufnimmt und die Logik den Schlüsselrohling validiert.

6. Schlüsselduplizierungsmaschine nach Anspruch 1, ferner umfassend ein Schlüsselschneidsystem, das mindestens ein Schneidelement (60, 62) umfasst.

7. Schlüsselduplizierungsmaschine nach Anspruch 6, wobei die Schlüsselduplizierungsmaschine das Rohling-Identifikationssystem und das Schlüsselschneidsystem in einer einzigen Einrichtung umfasst.

8. Schlüsselduplizierungsmaschine nach Anspruch 6, wobei das Schlüsselschneidsystem ferner ein Leuchtpaneel (52) und eine Reflektorplatte (54) umfasst, um eine Hintergrundbeleuchtung für den Schlüssel in der Öffnung bereitzustellen.

9. Schlüsselduplizierungsmaschine nach Anspruch 4, wobei der Masterschlüssel abgebildet und mit einer Vielzahl von Schlüsselrohlingen verglichen wird, um bei der Bestimmung eines geeigneten Schlüsselrohlings zu helfen, während das Bild verwendet wird, um Schlüsselmusterinformationen bereitzustellen, die in einen Schlüsselrohling geschnitten werden sollen.

10. Schlüsselduplizierungsmaschine nach Anspruch 1, ferner umfassend eine Benutzeroberfläche (40).

11. Verfahren zum Duplizieren von Schlüsseln, umfassend:
Anordnen einer Antenne (226) auf der Schlüsselduplizierungsmaschine (10) für die Kopplung mit einem Masterschlüssel (24), der einen darin eingebetteten Mikrochip aufweist;
Führen des Masterschlüssels durch eine Öffnung (230) in einem Außengehäuse (228);
Lesen von Daten aus dem Masterschlüssel;
Aufnehmen eines Bildes des Masterschlüssels an der Öffnung (230) mit einer optischen Bildgebungsvorrichtung (50); und
Vergleichen der Daten von dem Masterschlüssel mit Daten, die in einer Datenbank für bekannte Schlüsselrohlinge gespeichert sind, um einen passenden Schlüsselrohling zu identifizieren, der dem Masterschlüssel entspricht.

12. Verfahren nach Anspruch 11, ferner umfassend das Vergleichen von Merkmalen des Masterschlüssels mit Daten in einer Datenbank, die bekannten Schlüsselrohlingen entsprechen.

13. Verfahren nach Anspruch 11, ferner umfassend das Schneiden eines Schlüsselmusters in den passenden Schlüsselrohling, wobei das Schlüsselmuster einem Schlüsselmuster des Masterschlüssels entspricht.

14. Verfahren nach Anspruch 11, wobei die Schritte des Lesens von Daten aus dem Masterschlüssel und des Schneidens des Schlüsselmusters auf einer einzigen Einrichtung ausgeführt werden.

15. Verfahren nach Anspruch 11, ferner umfassend das Speichern von Informationen in Zusammenhang mit einer Vielzahl von Schlüsselrohlingen auf der Datenbank.

## Revendications

1. Machine de duplication de clé (10) comportant :
un système d'identification d'ébauche de clé comportant :
une coque extérieure (228) ayant une ouverture (230) pour recevoir une clé (22, 24) incluant une micro-puce intégrée en son sein ;
un dispositif de lecture/écriture (226) positionné sur la machine de duplication de clé pour s'interfacer avec ladite clé située dans l'ouverture, dans laquelle ledit dispositif de lecture/écriture est configuré pour transmettre des données à ladite clé et configuré pour recevoir des données à partir de ladite clé située au niveau de ladite ouverture ; et
un dispositif d'imagerie optique (50) est monté au sein de la machine et positionné de sorte qu'il capture une image optique de ladite clé au niveau de ladite ouverture.

2. Machine de duplication de clé selon la revendication 1, dans laquelle ladite clé est une clé maîtresse (22).

3. Machine de duplication de clé selon la revendication 1, dans laquelle ladite clé est une ébauche de clé (24).

4. Machine de duplication de clé selon la revendication 2, dans laquelle le système d'identification d'ébauche de clé inclut une base de données et une logique, dans laquelle ledit dispositif d'imagerie optique capture une image de la clé maîtresse, ladite logique identifie des caractéristiques de la clé maîtresse et ladite logique compare lesdites caractéristiques de la clé maîtresse à des données dans une base de données.

5. Machine de duplication de clé selon la revendication 3, dans laquelle ledit dispositif d'imagerie optique capture une image de l'ébauche de clé dans l'ouverture et ladite logique valide ladite ébauche de clé.

6. Machine de duplication de clé selon la revendication 1, comportant en outre un système de découpe de clé qui inclut au moins un élément de découpe (60, 62).

7. Machine de duplication de clé selon la revendication 6, dans laquelle la machine de duplication de clé incorpore le système d'identification d'ébauche et le système de découpe de clé dans un seul appareil.

8. Machine de duplication de clé selon la revendication 6, dans lequel le système de découpe de clé comporte en outre un panneau d'éclairage (52) et une plaque de réflecteur (54) pour fournir un rétro-éclairage à ladite clé dans l'ouverture.

9. Machine de duplication de clé selon la revendication 4, dans laquelle ladite clé maîtresse est imagée et comparée à une pluralité d'ébauches de clé pour aider à déterminer une ébauche de clé appropriée, tout en utilisant l'image pour fournir des informations de motif de clé à découper dans une ébauche de clé.

10. Machine de duplication de clé selon la revendication 1, comportant en outre une interface utilisateur (40).

11. Procédé de duplication de clé, comportant :
le positionnement d'une antenne (226) sur la machine de duplication de clé (10) pour s'interfacer avec une clé maîtresse (24) ayant une micro-puce intégrée dans celle-ci ;
le passage de ladite clé maîtresse à travers une ouverture (230) dans une coque extérieure (228) ;
la lecture de données à partir de ladite clé maîtresse ;
la capture d'une image de ladite clé maîtresse au niveau de ladite ouverture (230) avec un dispositif d'imagerie optique (50) ; et
la comparaison des données de ladite clé maîtresse à des données stockées dans une base de données pour des ébauches de clé connues afin d'identifier une ébauche de clé adaptée correspondant à la clé maîtresse.

12. Procédé selon la revendication 11, comportant en outre la comparaison de caractéristiques de la clé maîtresse à des données dans une base de données correspondant à des ébauches de clé connues.

13. Procédé selon la revendication 11, comportant en outre la découpe d'un modèle de clé dans l'ébauche de clé adaptée, le motif de clé correspondant à un motif de clé de la clé principale.

14. Procédé selon la revendication 11, dans lequel les étapes de lecture de données de ladite clé maîtresse et de découpe dudit modèle de clé sont réalisées sur un seul appareil.

15. Procédé selon la revendication 11, comportant en outre le stockage d'informations associées à une pluralité d'ébauches de clé dans ladite base de données.
